Europäisches Patentamt

European Patent Office

Office européen des brevets

(11) Publication number: 0 295 763
A1

## EUROPEAN PATENT APPLICATION

(21) Application number: 88303062.9

(22) Date of filing: 06.04.88

(51) Int. Cl.4: **E01C 7/14** , **C08G 18/32** , **C08G 18/66** , **C08G 18/22**

Claims for the following Contracting States: ES + GR.

(30) Priority: 22.05.87 US 53934

(43) Date of publication of application:
21.12.88 Bulletin 88/51

(84) Designated Contracting States:
AT BE CH DE ES FR GB GR IT LI LU NL SE

(71) Applicant: ARNCO
One Centerpointe Drive
La Palma California 90623(US)

(72) Inventor: Wyman, Ransome J.
8 Camino Calibri
Calabasas California 9102(US)
Inventor: Lee, Eugene E.
6601 Crista Palma Drive
Huntington Beach California 92647(US)

(74) Representative: Newstead, Michael John et al
Page & Co. Temple Gate House Temple Gate
Bristol BS1 6PL(GB)

(54) Polymer concrete.

(57) A composition and method for the formation of polymer concrete are described. A lower molecular weight hydroxyl terminated polyether polyol is reacted with an organic polyisocyanate in the presence of a solvent or plasticizer to form a precursor solution having a specific gravity in excess of 1, which is catalyzed by organic iron and organic bismuth catalysts in amounts sufficient to cause the composition to gel in about thirty-three seconds. The reaction products are pumped or poured over an aggregate and allowed to percolate therethrough to form a rapidly-setting polymer concrete.

EP 0 295 763 A1

## POLYMER CONCRETE

Field of the Invention

This invention relates to polyurethane chemistry and, more particularly, to the formation of polymer concrete.

Background and Summary of the Invention

Damage to a roadway frequently requires rapid emergency repair in order to minimize interruption of essential operations. Prior methods for roadway repair have included the use of cementitious materials such as concrete and asphalt, but each requires a great deal of time in the preparation of the subgrade and the curing of the cast or poured pavement. For example, Portland cement must be cured or hardened slowly over a period of about a week, during which time it must be protected from vibration, freezing and a too rapid rate of drying. Asphalt, while attaining a fair degree of strength upon cooling, requires heating of various hydrocarbon derivatives and specialized application techniques in order to provide any degree of compressive strength. U.S. Patent No. 4,630,963 (the disclosure of which is incorporated by reference herein) describes the use of a rapid setting, non-elastomeric polyurethane precursor which is percolated through an aggregate to form a polymer concrete composition.

The optimal repair system for any roadway must be structurally sound, cure virtually flush with the surrounding pavement, and be rapidly accomplished under a wide variety of temperatures and weather conditions.

Rapid runway repair has been accomplished by several methods, which proceed by first filling a roadway depression with an aggregate, such as pavement debris or crushed stone, followed by placing a rigid covering over the fill. The cover has comprised preformed metallic or concrete slabs which are anchored to existing pavement which surrounds the damage portion. However, since these coverings must be of appreciable thickness to withstand the loads imposed by passing traffic, the transport and placement of such slabs is a significant impediment to rapid repair. Moreover, the aggregate must be carefully levelled to enable the placement of the covering flush with the existing pavement. In addition, the anchoring of such material to the surrounding pavement often creates a raised portion which may cause damage to vehicles which traverse the repair at any appreciable speed.

Poured-in-place structural caps have also been employed over the above-described aggregate fill material. This type of repair employs rapid-setting materials which have substantial flexural strength which are poured into the depression, and cure to form a flush cap above the fill material. In order to provide sufficient strength over low-strength subgrades, this cap may be as much as twelve inches thick.

Due to the problems set forth above, a number of polymer concrete materials have been proposed, along with methods for their use. For example, an acrylic polymer, methylmethacrylate, has been tested and found to provide a structural cap crater repair material which may be poured flush with the surrounding pavement. One disadvantage of the methylmethacrylate polymer concrete has been the high flammability of the monomeric precursors, which may cause substantial problems both in the storage and use of the material.

Water incompatibility has been a major problem with nearly all polymers, as water is invariably found in aggregate material or in the subgrade beneath the pavement. In addition, a water-intolerant material would not be usable during any amount of rainfall. Accordingly, others have selected furfuryl alcohol polymers and unsaturated polyesters to develop water-compatible systems. In addition, various water-absorbing additives have been tested, such as Portland cement and silica flour. Magnesium polyphosphate cement formulations have also been employed which permit moisture contents of up to 3 weight percent.

Polyurethane formulations have heretofore been incapable of providing satisfactory roadway repair material, particularly under wet placement conditions as the ambient moisture in the aggregate or standing water in the crater react undesirably with the isocyanate component in such formulations. This isocyanate-water reaction not only yields a low-strength polymer concrete, but also contributes to a somewhat spongy consistency of the cured material due to the formation of carbon dioxide bubbles during the polymerization reaction. Moreover, any standing water in the crater will cause the urethane to foam excessively, and the polymer thus swells and raises above the roadway surface.

The above-described problems are most apparent when the rapid repair of bomb-damaged air fields during hostilities is attempted. The repair of air field pavements damaged by various weapons must be completed rapidly following an attack in order to launch retaliatory missions. Any repair method or material which is disposed above the level of the surrounding pavement, creating a raised portion on the runway, presents special problems for military aircraft due, in part, to high runway speeds and heavy cargos.

For example, the repair diameter of a crater formed from the explosion of a 750 lb. bomb can measure as much as sixty feet, with a depth approaching fifteen feet. As a further complication, any repair material must be placed in less than thirty minutes under adverse battle conditions and under environmental extremes, i.e., temperatures ranging from -25° F to 125° F and at rainfall rates of in excess of one inch per hour.

Further, the flammability of cured polymer concrete has presented a particular problem in military operations. For example, in one recent test, a freshly cured polyurethane repair sch as described above was set afire by heavy construction equipment involved in the repair.

According to the present invention, methods and materials are provided for the formulation of a lead and mercury-free solution which may be caused to percolate quickly through at least a portion of an aggregate to form a polyurethane concrete. The solution is hydrophobic and has a specific gravity greater than that of water so that any ambient moisture within the aggregate is displaced. The solution has a viscosity less than 150 centipoise at the temperature of use, preferably about 50 cps., so that complete percolation through fine aggregate is facilitate. The combination of catalysts in the solution provides a curate which virtually eliminates any water-isocyanate reaction in the polymer precursor during the displacement of water, and the combination may be varied to allow cure times as little as five seconds and to allow constant cure rates at wide temperature ranges. As described in the preferred embodiment, the present invention provides a lead and mercury-free polyurethane concrete precursor which enables a non-flammable pavement repair which is capable of supporting vehicular traffic in as little as 30 minutes.

## Detailed Description

Details disclosed herein are merely representative and are deemed to afford the best embodiments known at this time to provide a basis for the claims and define the scope of the invention. Unless otherwise indicated by the context, all parts and percentages are expressed herein as weight percent.

With regard to the rapid-setting polymer concrete described in this embodiment, the polymer is formed as the reaction product of materials in a precursor solution having a specific gravity of from more than one, and preferably from about 1.1 to about 1.6. The initial viscosity (prior to any significant gelling or polymerization) of less than about 1.5 poise, and a gel time of less than about five minutes is preferred. Accordingly, the solution displaces ambient moisture and polymerizes prior to any appreciable water-isocyanate reaction which might otherwise occur, and yet percolates sufficiently through the aggregate to form a strong, low cost concrete in as little as thirty minutes.

As hereinafter described, the polymer concrete is formed from a first and a second solution which include, in toto 0 to 8% of a hydroxyl-terminated polyether polyol, 23 to 38% of an organic polyisocyanate, 38 to 58% of a solvent and/or plasticizer, 8 to 20% of a diaminotetrahydroxyl polyol, 0.01 to 2% of an organic iron catalyst (0.0002 to 0.04 weight percent iron) and up to 0.5% (0.3% weight percent bismuth), preferably up to 0.2% (0.12 weight percent bismuth), of an organic bismuth catalyst. These components may be distributed in either of the first and second solutions, except that the catalysts, i.e., the diaminotetrahydroxyl polyol and the organic iron and bismuth components, must be present only in the first solution and the organic polyisocyanate component must be present only in the second solution, to avoid premature reactions therebetween.

Referring more particularly to the polymer-forming materials, these precursors are advantageously provided in two separate containers, usually referred to as an A-side and a B-side, although the reactive materials other than the catalyst can be provided from one container. From the point of view of ease of measurements, the A-side and B-side are usually formulated so as to require approximately equal volume for the appropriate reaction, as will be described in more detail hereinafter.

Generally, one side comprises the isocyanate component, a portion of the solvent or plasticizer, and may also contain extender oil. The other side contains the polyol, the remaining amount of solvent, additional extender oil, and the catalysts for the polymerization reaction. Alternatively, all of the ingredients except the isocyanate can be placed in one container, in which case the streams coming from the containers must be metered appropriately to provide the desired ratio of components. It is generally preferred, however, to include solvent or plasticizer on each side so as to maintain equal densities of the first and second sides to facilitate equal pumping rates. Most generally, the components can be combined in any ratio to fit convenient pumping apparatus.

Any of the organic polyisocyanates used in the art to prepare polyurethanes can be used, for example, hexamethylene diisocyanate; m-xylylene diisocyanate; toluene diisocyanate; polymethylene polyphenylisocyanate; 4,4'-diphenylmethane diisocyanate; m-phenylene diisocyanate; p-phenylene diisocyanate; 3,3'-dimethyl-4,4'-diphenyl diisocyanate; methylenembis(2-methyl-p-phenylene) diisocyanate; 3,3'-dimethoxy-4,4'-biphenylene diisocyanate; 2,2', 4,4-tetramethyl-4,4'-biphenylene diisocyanate; 3,3'-dimethyl-4,4'-diphenylmethane diisocyanate; 4,4'-diphenylisopropylidene diisocyanate; 1,5'-naphthylene diisocyanate; and polymethylene polyphenylisocyanate. One group of especially preferred polyisocyanates are the toluene diisocyanate isomers, particularly 2,4-toluene diisocyanate. The commercially available blends of the 2,4- and 2,6-isomers are effective -- the 80:20 and 65:35 blends being most readily available. Another especially preferred polyisocyanate is polymethylene polyphenylisocyanate such as sold by the Dow Chemical Company under the trademark PAPI 901. This has an average molecular weight of 260-300, an isocyanate equivalent of 133, and NCO content of 31.6 weight percent, an acidity of 0.05% as HCl and a viscosity at 25° C of 55 cps.

Most generally, the polyol can be chosen from a variety of OH terminated polyethers having a molecular weight of less than about 2000. Polyols having a molecular weight in excess of 2000 provide an unacceptable viscosity in the final solution. In particular, the polyols sold by Olin Chemicals under the trademark Poly-G are useful.

In addition, the use of polyoxyalkylene polyols having 2-4 hydroxyl groups and where the alkylene group has 2-6 carbon atoms is advantageous. A large variety of such polyols is available, obtained by polymerization of an alkylene oxide, such as ethylene oxide, propylene oxide, or butylene oxide, with a glycol. Polyethers having higher functionality may be obtained by reaction with a triol or higher polyol, such as glycerine, trimethylolpropane, and pentaerythritol. Polyols of the above types are available commercially, for example: Voranols (trademark) from Dow Chemical Company; and Pluracols (trademark) from BASF Wyandotte Corporation.

In an example hereinafter set forth, where a rapid setting polymer is obtained from a solution which percolates quickly through the aggregate, up to about 8% of an oxyalkylene polyol having two hydroxyl groups and a lower alkylene group, such as dipropylene glycol, is employed. Dipropylene glycol such as sold by the Dow Chemical Company has an average molecular weight of 134 d., an equivalent weight of 67, a hydroxyl number of 836 and a viscosity at 25° C of 74 cps. Other glycols such as ethylene glycol, diethylene glycol, triethylene glycol, tetraethylene glycol, propylene glycol 1,4-butane diol, 1,4-butene diol, 1-5-pentane diol and tripropylene glycol may also be used in place of or in addition to dipropylene glycol.

In addition, the use of at least about 8%, and preferably about 8% to 20%, of a propoxylate ethylene diamine such as the diaminotetrahydroxyl polyol referred to as Entprol (N,N,N' ,N'-tetrakis(2-hydroxypropyl)ethylenediamine), sold by the Carpenter Chemical Corporation under the trade designation Carpol EDP-292 or by the BASF Wyandotte Chemical Corporation under the trade designation Quadrol, is preferred on the catalyst side of the formulation, and provides substantial advantages in the examples hereinafter set forth as it serves not only as part of the polymer backbone but also provides an advantageous catalytic effect on the polymerization reaction.

In addition, organo-metal compounds of iron and bismuth have shown significant advantages as catalysts, for example, iron and bismuth salts of a carboxylic acid having from about 2 to about 26 carbon atoms such as carboxylates, acetates, naphthenates, octoates, oleates and others may be employed. Preferred catalysts for the isocyanate hydroxyl reaction are ferric acetyl acetonate (FAA) (15 weight percent iron) dissolved in N-methyl-2-pyrolidone (10% solution) or the iron carboxylate catalyst (12 weight percent iron) such as sold by Mooney Chemical, Inc. under the trade designation Iron Neo-Nap, which promote the development of the ultimate physical properties of the polymer concrete. However, any organic iron catalyst will provide the advantages of the invention. Similarly, while any organic bismuth catalyst is operative, the preferred bismuth catalyst, a bismuth diethyl acetate (about 64 weight percent bismuth) either as a 10% solution in N-methyl-2-pyrolidone or as the catalyst sold by Cosan Chemical Corporation under the trade designation Coscat 83 has been found to control the initial reaction rate and gel time when employed in combination with the iron catalysts. In that regard, the bismuth catalyst used in amounts of from 0 to about 1% of the total composition (i.e., up to about 0.3 weight percent bismuth), allows a setting time of from over 100 seconds to as little as 5 seconds.

The solvents added to the formulation provide a significant advantage, especially when the solutions are desired to percolate quickly through the aggregate. In addition, the solvents act as mass to control the heat produced as the polymer-aggregate matrix cures, and thus are particularly important where large craters are to be filled. A wide variety of solvents may be employed, dependent upon the intended use of the formulation. In the examples set forth, chlorinated solvents are preferred for their fire retardancy characteristics. Solvents such as perchloroethylene, monochlorobenzene or other chlorinated solvents are preferred. With regard to flammability, perchloroethylene has no fire or flash point by either the open cup or the closed cup test method and produces a polymer concrete which will not sustain combustion. In addition, perchloroethylene is valued for its viscosity suppression in the final product mix, and is also preferred for an ability to displace water due to its specific gravity of 1.625. With regard to water displacement, any solvent having a specific gravity of greater than 1 will serve this purpose, dependent upon the rate and amount of water displacement desired for the particular application. If fire retardancy is not an issue, most any other solvent, excluding reactant solvents such as those containing hydroxyl, amine or thio groups, may be used.

Significant advantages have been obtained by employing a plasticizer such as 2,2,4-trimethyl 1,3-pentanediol diisobutylate as a substitute for all or part of the solvent, that is, in amounts of from 38 to 58%. Any one of the wide variety of plasticizers may be used for this purpose, such as diethyl, dibutyl, diisononyl, di(2-ethylhexyl), diisooctyl or butyloctyl phthalates; dioctyl adipate; or triaryl, tri (B-chloropropyl) or oligomeric chloroalkyl phosphates. These plasticizers have been found to add significant stability to the polyurethane precursors and provide lower shrinkage of the final polymer and a significant decrease in brittleness over similar polymers prepared with solvents.

One can use any of the processing oils commonly used to extend polymers that are compatible with the urethane precursors. Preferably, the extender oil is substantially aromatic and may contain polar compounds. A particularly effective oil is the aromatic extender oil sold under the trademark Califlux LP sold by the Witco Chemical Company. Califlux LP comprises about 78% aromatics and 9% polar compounds, the remainder being saturates. It has a specific gravity at 6° F of 0.986, and API gravity of 13.1, a viscosity at 40° C of 36 cs, a flash point COC of 320° F, and an aniline point of less than 59° F.

Generally the higher the amount of polar components and aromatic content of the extender oil, the better will be the compatibility in the polyurethane composition, since polyurethane precursors have polar groups. Also, oil compatibility increases with increase in molecular weight of the polyol, assuming stoichiometry with the polyisocyanate. Accordingly, it may be advantageous in certain instances to use higher molecular weight polyols.

With respect to the following examples, it should be understood that polymer concrete is useful for a wide variety of purposes, not all of which require percolation, non-flammability, water displacement or rapid cure. Accordingly, the formulations and examples set forth herein are directed to the rapid repair of roadways as detailed therein, as this method of use constitutes the best mode contemplated by Applicant of carrying out the invention.

In this regard, the ingredients in each of the A-and B-sides are proportioned to facilitate the pumping and mixing of the precursor solution, although variations therefrom may be made as long as the isocyanate and catalyst are not intermixed until immediately prior to cure.

The isocyanate side of the formulation, herein referred to as the A-side, is comprised from about 45 to 76% of an organic polyisocyanate, and from 30 to 55% of the solvent. In addition, extender oil may be included from 0 to about 30% of the A-side.

The catalyst side, referred to herein as the B-side, contains the polyol, such as 16 to 40% propoxylated ethylene diamine and from 0 to 16% dipropylene glycol, 0 to 30% extender oil, 0 to 60% plasticizer and from about 45 to 60% solvent. The propoxylated ethylene diamine polyol, as mentioned above, serves in part to catalyze the polymerization reaction. In addition, organic iron catalysts are included in amounts of rom 0.02 to 4.0% (weight of the diluted organic complex), and organic bismuth catalyst from 0 to 1% (weight of the diluted organic complex) of the B-side (i.e., 0.01 to 2.0% and up to 0.5%, respectively, of the total composition).

The amount of organic bismuth catalyst in the polymerizing solution is critical with respect to the reaction rate and gel time. Generally, the bismuth catalyst is varied to provide a desired rapid gel time, although the curing rate varies widely with temperature conditions. For example, with a total amount of 0.04% of the diluted iron complex catalyst, and no bismuth catalysts, the polymerizing solution had a gel time of from 2 to 3 minutes. When added to the B-side in the amount of 0.53% (.26% of the total composition), the gelling of the solution occurred in 5 seconds. This rapid gel time is significant in view of the low amount of catalysts which were employed, and amounts to a significant cost saving. As described further below, gel time increases with a decrease in ambient temperature and thus additional bismuth catalyst is required to maintain the desired gelling point as temperatures decrease. The converse is true for higher ambient temperatures, and the amount of bismuth catalyst should be decreased accordingly.

Example 1

Polymer reactants were prepared as follows:

## Example 1

### Polymer reactants were prepared as follows:

| "A" side (parts per 100) | | "B" side (parts per 100) | |
|---|---|---|---|
| Papi 901 | 68.5 | Quadrol | 34.0 |
| Hi-Sol 15 | 31.5 | Hi-Sol 15 | 57.2 |
| | | Dipropylene glycol | 8.8 |

These reactants had a weight ratio (A/B) of 117/100 and a volume ratio (A/B) of 100/100. When mixed, these reactants have a specific gravity of about 1.1.

The initial viscosity of the mixed solution at various temperatures, i.e., prior to any significant polymerization, may be determined from the values set forth in Table 1. Thus, the reactants of Example 1 had an average viscosity of 75° F of about 17 cps. It has been found that a viscosity in excess of about 150 cps begins to inhibit the percolation of the polymerizing solution through the aggregate. Accordingly, a viscosity of less than 150 cps at the temperature of use is preferred. The data shown in Table 1 demonstrate that the solutions of the invention have appropriate percolation characteristics at temperature of from freezing to 110° F. Varying amounts of the diluted FAA organic iron catalyst were added to the B-side, and mixture of the A- and B-sides produced a polymer precursor having the following gel times at 75° F:

| Percent of Iron Catalyst | Time, in Seconds |
|---|---|
| 0 | 153 |
| 0.08 | 140 |
| 0.2 | 90 |

## Example 2

Varying amounts of organic bismuth catalyst (Coscat 83) were added to the Example 1 B-side and the following gel times were produced at 75° F:

| Percent | Time, in Seconds |
|---|---|
| 0 | 140 |
| 0.05 | 44 |
| 0.10 | 30 |
| 0.30 | 9 |
| 0.53 | 5 |

## Example 3

Using the formulation of Example 1 B-side with 0.08% of the organic iron catalyst, the amount of bismuth catalyst was varied, as follows, to achieve a 10 second pot life (gel time) at the following temperatures:

| Temp-degree F. | Percent of Coscat 83 Added |
|---|---|
| 20 | 3.15 |
| 30 | 2.20 |
| 50 | 0.85 |
| 75 | 0.30 |
| 90 | 0.17 |
| 110 | 0.15 |

At $0°$ F, 10 percent Coscat 83 produced a gel time of 20 seconds.

The formulation of Example 3 was repeated, and the amount of bismuth catalyst varied to achieve a 33 second pot life at 50, 75, 90 and $110°$ F.

| Temp-degree F. | Percent of Bismuth Catalyst Added |
|---|---|
| 50 | 0.180 |
| 75 | 0.100 |
| 90 | 0.026 |
| 110 | 0.023 |

## Example 4

Polymer reactants were prepared as follows:

| "A" Side (parts per 100) | | "B" Side (parts per 100) | |
|---|---|---|---|
| Papi 901 | 68.5 | Quadrol | 34.0 |
| Hi-Sol | 31/5 | Hi-Sol 15 | 56.92 |
| | | Dipropylene glycol | 8.8 |
| | | Bismuth Catalyst | 0.02 |
| | | Iron Catalyst | 0.08 |

These reactants had a weight ratio (A/B) of 117/100 and a volume ratio of 1:1. When mixed, these reactants had a specific gravity of about 1.1, viscosity of about 16.5 cps, and the following physical characteristics:

|  |  | ASTM Method |
|---|---|---|
| Hardness | 70D | D-2240 |
| Tensile Strength | 4,500 psi | D-412 |
| Elongation at Break | Less than 100% | D-412 |
| Tear Strength, Die C | 200 pli | D-624 |
| Flexural Strength | 4,400 psi | C-78 |
| Compression Strength | 5,500 psi | C-39 |
| Splitting Tensile Strength | 1,460 psi | C-496 |
| Abrasion Resistance | 1.48 gram loss | D-3389 H-1 wheels 1,000 grams, 1,000 cycles |
| Coefficient, Linear Thermal Expansion | $66.8 \times 10^{-6}$ in/in/°F | D-698 |

The formulations set forth in Examples 4 and 5 have been installed in test areas patching potholes on concrete taxiways at a large municipal airport, and for the repair of potholes and concrete joints by two state transportation departments. In addition, each have been employed in the runway repair tests which are described in U.S. Patent No. 4,630,963 and in each instance the polymers formed a solidified polymer within two minutes from mixing, and a load-bearing structurally secure polymer concrete within thirty minutes when poured through an aggregate mixture.

## Example 5

Polymer reactants were prepared as follows:

| "A" Side (Parts per 100) | | "B" Side (Parts per 100) | |
|---|---|---|---|
| Papi 901 | 69 | Quadrol | 34.0 |
| 2,2,4-trimethyl- 1,3 pentane dioldiiso- butylate | 31 | 2,2,4-trimethyl- 1,3 pentane dioldiiso- butylate | 57.2 |
|  |  | Dipropylene glycol | 8.8 |
|  |  | Bismuth Catalyst | 0.03 |
|  |  | Iron Catalyst | 0.1 |

These reactants were mixed in a weight ratio (A/B) of 117/100 and a volume ratio of 1:1. When mixed, these reactants have a specific gravity of about 1.08 and an initial viscosity (prior to gelation) of about 40 cps. The mixing of the A- and B-side produced a polymerizing mixture which had a pot life of about one minute, a gel time of one and one-half minutes, and a time from pouring until total cure of thirty minutes. The initial viscosity of this mixed solution at various temperatures and prior to any significant polymerization may be determined from the values in Table I. After having been poured over a pea gravel aggregate, the polymer

8

was found to have the following characteristics:

|  |  | ASTM Method |
|---|---|---|
| Hardness | 70D | D-2240 |
| Tensile strength | 5,000 psi | D-412 |
| Elongation at break | less than 100 | D-412 |
| Tear Strength, | | |
| Die C | 175 pli | D-624 |
| Flexural Strength | 4,400 psi | C-78 |
| Compression Strength | 7,600 psi | C-39 |
| Splitting Tensile | | |
| Strength | 1,300 psi | C-496 |
| Abrasion Resistance | 0.68 gram loss | D-3389 |
| | | H-1 wheels |
| | | 1,000 grams, |
| | | 1,000 cycles. |
| Coefficient of | | |
| Lineal Thermal | | |
| Expansion, | $66.1 \times 10^{-6}$ | D-698 |
| | in/in/°F | |

From the foregoing description, one skilled in the art can readily ascertain the essential characteristics of the invention and, without departing from the spirit and scope thereof, can adapt the invention to various usages and conditions. Changes in form and the substitution of equivalents are contemplated as circumstances may suggest or render expedient; and although specific terms have been employed herein, they are intended in a descriptive sense and not for purposes of limitation, the purview of the invention being delineated in the following claims.

Although the foregoing invention has been described in some detail by way of illustration and example, changes in form and the substitution of equivalents are contemplated as circumstances may suggest or render expedient; and although specific terms have been employed herein, they are intended in a descriptive sense and not for purposes of limitation, the scope of the invention being delineated in the following claims.

## TABLE I

### Viscosity, CPS

| Temp. °F. | Ex. 1 | Ex. 5 |
|---|---|---|
| 0 | 48 | 435 |
| 10 | 38 | 375 |
| 20 | 31 | 255 |
| 30 | 25 | 150 |
| 40 | 20 | 103 |
| 50 | 18 | 70 |
| 60 | 17 | 54 |
| 70 | 16 | 43 |
| 80 | 14 | 34 |
| 90 | 12 | 28 |
| 100 | 11 | 23 |
| 110 | 10 | 21 |

## Claims

1. A method for filling a cavity with a solid material, comprising:

filling the cavity with an aggregate;

forming a solution having a specific gravity of greater than one and an initial viscosity of less than about 150 cps at the temperature of use and comprising from about 0 to 8% of an OH terminated polyether polyol having a molecular weight of less than 2,000, from about 23 to 38% of an organic polyisocyanate, from about 38 to 58% of a solvent, from about 8 to 20% of a diaminotetrahydroxyl polyol, at least 0.0002 to 0.04 weight percent iron in an organic iron catalyst and from about 0 to 0.3 weight percent bismuth in an organic bismuth catalyst; and

dispersing the solution through the aggregate and allowing the solution to percolate therethrough to fill the cavity.

2. The method of claim 1 wherein the diaminotetrashydroxyl polyol is N,N,N′,N′-tetrakis(2-hydroxypropyl) ethylene diamine.

3. The method of claim 1 or 2 wherein the organic bismuth catalyst is included in an amount sufficient to cause the solution to gel within less than thirty-three seconds.

4. The method of claim 3 wherein the solvent is perchloroethylene.

5. The method of claim 1 or 2 wherein the solvent is a plasticizer.

6. The method of claim 3 wherein the solvent is a plasticizer.

7. The method of claim 6 wherein the plasticizer is 2,2,4-trimethyl 1,3-pentanediol diisobutylate.

8. A polyurethane composition adapted for use in combination with an aggregate as a material for filling a depression in a roadway, said composition including a first and second solution comprising, in toto

from about 0 to 8% of an OH-terminated polyether polyol having a molecular weight of less than 2,000,

from about 38 to 58% of a solvent,

from about 23 to 38% of an organic polyisocyanate,

from about 8 to 20% of a diaminotetrahydroxyl polyol,

at least 0.0002 weight percent iron in an organic iron catalyst, and

from about 0 to 0.3 weight percent bismuth in an organic bismuth catalyst,

with the organic iron catalyst, organic bismuth catalyst and the diaminotetrahydroxyl polyol being present only in the first solution and the organic polyisocyanate being present only in the second solution;
wherein the first and second solution have a combined specific gravity of from about 1.1 to 1.6 and an average viscosity, prior to mixing, of less than about 150 cps.

9. The composition of claim 8 wherein the solvent is a plasticizer.

10. The composition of claim 9 wherein the plasticizer is 2,2,4-trimethyl 1,3-pentanediol diisobutylate.

Claims for the following contracting state : ES

1. A method for filling a cavity with a solid material, comprising:

filling the cavity with an aggregate;

forming a solution having a specific gravity of greater than one and an initial viscosity of less than about 150 cps at the temperature of use and comprising from about 0 to 8% of an OH terminated polyether polyol having a molecular weight of less than 2,000, from about 23 to 38% of an organic polyisocyanate, from about 38 to 58% of a solvent, from about 8 to 20% of a diaminotetrahydroxyl polyol, at least 0.0002 to 0.04 weight percent iron in an organic iron catalyst and from about 0 to 0.3 weight percent bismuth in an organic bismuth catalyst; and

dispersing the solution through the aggregate and allowing the solution to percolate therethrough to fill the cavity.

2. The method of claim 1 wherein the diaminotetrahydroxyl polyol is N,N,N′,N′-tetrakis(2-hydroxypropyl) ethylene diamine.

3. The method of claim 1 or 2 wherein the organic bismuth catalyst is included in an amount sufficient to cause the solution to gel within less than thirty-three seconds.

4. The method of claim 3 wherein the solvent is perchloroethylene.

5. The method of claim 1 or 2 wherein the solvent is a plasticizer.

6. The method of claim 3 wherein the solvent is a plasticizer.

7. The method of claim 6 wherein the plasticizer is 2,2,4-trimethyl 1,3-pentanediol diisobutylate.

8. A method for preparing a polyurethane composition adapted for use in combination with an aggregate as a material for filling a depression in a roadway, said method comprising mixing a first and second solution comprising, in toto

from about 0 to 8% of an OH-terminated polyether polyol having a molecular weight of less than 2,000,

from about 38 to 58% of a solvent,

from about 23 to 38% of an organic polyisocyanate,

from about 8 to 20% of a diaminotetrahydroxyl polyol,

at least 0.0002 weight percent iron in an organic iron catalyst, and

from about 0 to 0.3 weight percent bismuth in an organic bismuth catalyst,

with the organic iron catalyst, organic bismuth catalyst and the diaminotetrahydroxyl polyol being present only in the first solution and the organic polyisocyanate being present only in the second solution;

wherein the first and second solution have a combined specific gravity of from about 1.1 to 1.6 and an average viscosity, prior to mixing, of less than about 150 cps.

9. The method of claim 8 wherein the solvent is a plasticizer.

10. The method of claim 9 wherein the plasticizer is 2,2,4-trimethyl 1,3-pentanediol diisobutylate.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 630 963 (R.J. WYMAN)<br>* Claims 1,2,4,9 *<br>--- | 1,2,4,8 | E 01 C 7/14<br>C 08 G 18/32<br>C 08 G 18/66<br>C 08 G 18/22 |
| Y | FR-A-2 288 125 (BERGWERKSVERBAND)<br>* Claims 1,3; page 2, lines 12-20 *<br>--- | 1,2,4,8 | |
| A | US-A-4 139 676 (E.W. JANSSEN et al.)<br>* Claims 1,5,11; column 2, lines 44-63 *<br>--- | 1 | |
| A | US-A-4 611 044 (L.W. MEYER et al.)<br>* Claims 1-4,8-11; column 2, line 16 - column 3, line 17 *<br>--- | 1 | |
| A | US-A-3 231 597 (J.R. FISCHER et al.)<br>* Claims 1,6 *<br>----- | 1 | |

TECHNICAL FIELDS SEARCHED (Int. Cl.4)

E 01 C
C 08 G

The present search report has been drawn up for all claims

| Place of search | Date of completion of the search | Examiner |
|---|---|---|
| THE HAGUE | 22-09-1988 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)